# EUROPEAN PATENT SPECIFICATION

(11) **EP 1 090 084 B1**
(45) Date of publication and mention of the grant of the patent: **25.11.2009**
(21) Application number: 99926134.0
(22) Date of filing: 02.06.1999
(51) Int. Cl.: C09J 7/02, B65D 75/58

(54) **A SYNTHETIC BASED SELF SEAL ADHESIVE SYSTEM FOR PACKAGING**
SELBSTVERSCHLIESSENDES ADHÄSIVSYSTEM AUF SYNTHETISCHER BASIS FÜR VERPACKUNGEN
SYSTEME ADHESIF AUTOCOLLANT A BASE DE MATIERES SYNTHETIQUES POUR APPLICATIONS D'EMBALLAGE

(30) Priority: 18.06.1998 US 99177
(43) Date of publication of application: 11.04.2001
(73) Proprietor: Bostik, Inc., Wauwatosa, Wisconsin 53226-3413 (US)
(72) Inventor: WASSERMAN, Charles, J., New Berlin, WI 53151 (US); STORY, Harold, G., Milwaukee, WI 53222 (US)
(74) Representative: Granet, Pierre
(86) International application number: PCT/US1999/012261
(87) International publication number: WO 1999/065998

(56) References cited:
- EP-A- 0 338 304
- EP-A- 0 683 216
- EP-A- 0 872 530
- WO-A-96/11236
- WO-A-99/39989
- US-A- 5 616 400
- US-A- 5 691 052
- DATABASE WPI Section Ch, Week 198831 Derwent Publications Ltd., London, GB; Class A18, AN 1988-215573 XP002900693 & JP 63 150359 A (MITSUI TOATSU CHEM INC), 23 June 1988 (1988-06-23)
- DATABASE WPI Section Ch, Week 199612 Derwent Publications Ltd., London, GB; Class A18, AN 1996-112932 XP002900694 & JP 08 012956 A (NICHIBAN KK), 16 January 1996 (1996-01-16)

## Description

### BACKGROUND OF THE INVENTION

The present invention relates to waterbase self seal adhesive packaging systems, and more particularly to a waterbase self seal adhesive flexible packaging system that: utilizes a synthetic-based, self seal adhesive containing no natural latex that provides a bond between two substrates when sealed, but when peeled, the adhesive splits, adhesively fails from either or both the front web or the back web, or destroys one or both of the substrates of the package. Primers and release coatings may also be used to enhance the performance of the self seal adhesive.

A self seal adhesive is a type of pressure-sensitive adhesive, which possesses the ability to form a strong bond to itself when pressure is applied and form a bond to the substrate on which it is applied. However, self seal adhesives preferably lack adhesion to surfaces such as plastic films and overprint varnishes which are on the opposite face of these flexible substrates so that such flexible substrates or webs bearing the self seal adhesives may be reeled into a roll for storage without blocking, i.e. without sticking together. Self seal adhesives are used in a variety of different types of applications, but are particularly desirable for use as sealants in packaging for food such as candies, chocolates, ice cream and the like which are sensitive to heat thus rendering undesirable the use of heat sealable adhesives to seal such packages. Another desirable application is in packaging medical products. Many medical devices are contained within paper packages and the adhesive used must provide a strong seal to maintain sterility, but when opened must be non-resealable. In addition, adhesive having high blocking or sticking properties are undesirable in such applications since contamination from paper fibers and/or shreds during opening may result in serious consequences.

Typical self seal adhesives have been formulated by combining a natural rubber elastomer, particularly a latex, with a tackifier and other ingredients such as stabilizers, antioxidants, etc. Natural rubber elastomers exhibit most of the desirable self sealing properties. However, natural rubber-based adhesives also exhibit poor aging properties such as discoloration, and may also possess objectionable odor. In addition, natural rubber-based adhesives containing natural latex have a variety of naturally occurring substances such as plant proteins which can cause allergic reactions in people.

A number of attempts have been made to develop a synthetic self seal, i.e. one that does not contain any natural latex. These approaches vary in the chemistry used. For example:

U.S. Patent No. 4,810,745, assigned to Century Adhesives Corp. describes both a natural latex based self seal and one comprised of a styrenic block copolymer emulsion (25 to 45%), an acrylic polymer (20 to 25%), a tackifier (25 to 35%), and vinylpyrolidone/styrene copolymer.

U.S. Patent No. 4,889,884, assigned to National Starch and Chemical Corp. describes a formulation comprised of four synthetic polymers, i.e. the first comprised of butyl acrylate, 2-ethyl hexyl acrylate, and vinyl acetate (Tg = 54°C, Williams Plasticity of 2.7), the second comprised of medium styrene content acrylic resin (Tg = -18°C, Williams Plasticity of 5.1), a third comprised of butyl acrylate, vinyl acetate, acrylic acid, and N-methylolacrylamide (T_{g} = -2°C, Williams Plasticity of 5.3), and a fourth comprised of a high styrene acrylic resin (T_{g} = +6°C). As alternatives for the fourth resin the following could be used: medium styrene content acrylic resin, a low ethylene vinyl acetate resin, a medium ethylene vinyl acetate resin, or a vinyl acrylic resin containing acid and N-methylolacrylamide.

U.S. Patent No. 4,898,787, assigned to National Starch and Chemical Corp., describes a formulation comprised of two synthetic polymer emulsions. The primary synthetic emulsion (45 to 70% of the formulation), has a T_{g} of -60°C to -40°C and a Williams Plasticity Number of 2.5 to 2.9, and a secondary styrene acrylic emulsion (30 to 55% of the formulation), has a Tg of -25°C to +5°C, and a Williams Plasticity Number of 5.0 to 5.6.

U.S. Patent Number 5,070,164, assigned to Mobil Oil Corp., describes an-acrylic copolymer comprised of the first monomer selected from the group of ethyl acrylate, hexyl acrylate, isoctyl acrylate, butyl acrylate, methyl acrylate and vinylidene chloride, a second monomer selected from the group of vinyl acetate, methyl methacrylate, styrene, ethyl methacrylate, and isobutyl methacrylate and a third monomer selected from the group of methacrylic acid, acrylic acid, itaconic acid, sulfoethyl methacrylate, and malic acid with an additional condition, that each of the first, second and third monomers are different.

U.S. Patent No. 5,486,426, assigned to Mobil Oil Corp., describes an acrylic copolymer composition, polymerized using an acrylonitrile from 10 to 65%, a soft monomer (acrylate esters from methyl to isooctyl or vinyl acetate) from 30 to 85%, and an acid third monomer (methacrylic acid, acrylic acid, crotonic, itaconic acid, sulfoethyl methacrylate, and maleic acid) from 1 to 3%, such that the resulting polymer has a Tg of-35°C.

Ato Findley product, C1301-01, is a synthetic self seal comprised of an elastomeric copolymer emulsion, and modifiers.

The above attempts to replace natural rubber with synthetic adhesives to alleviate these problems has proven to be difficult because of the poor performance of the resultant bonds. Accordingly, there remains a need for an improved self seal adhesive system containing no natural rubber which exhibits the desired attributes noted above.

### SUMMARY OF THE INVENTION

The present invention relates to waterbase self seal adhesive packaging systems, and more particularly to a waterbase self seal adhesive flexible packaging system that: utilizes a synthetic-based, self seal adhesive containing no natural latex that provides a bond between two substrates when sealed, but when peeled, the adhesive splits, adhesively fails from either or both the front web or the back web, or destroys one or both of the substrates of the package, called a Peelable. Primers and release coating may also be used to enhance the performance of the self seal adhesive.

In the Peelable system, after sealing, it is essential that the transfer front web adhesive has a balanced affinity between the anchor (back) adhesive and the substrate of the transfer (front) web. In many end uses, the terms front and back are substituted for transfer and anchor respectively. It is also essential that the anchor (back) adhesive has a balanced affinity between the transfer (front) adhesive and the substrate of the anchor (back) web. This is measured by the peel strength of the adhesive, and its failure mode, when peeling in a T-peel configuration. To those skilled in the art, types of failure modes are, but not limited to: cohesive failure, cohesive split, adhesive split, adhesive failure to one substrate or the other (clean peel), etc. The preferred transfer (front) or anchor (back) substrate is, but not limited to, polyolefin or metallized polyolefin films.

The transfer (front) and anchor (back) adhesives are formulated to contain no natural rubber, but instead contain an elastomer selected from: styrene-isoprene-styrene, styrene-butadiene-styrene, styrene-ethylene-butylene-styrene, ethylene-vinylacetate, amorphous polyalpha-olefin, styrene-butadiene rubber, acrylics, acrylic copolymers, epdms. butyl, polybutadienes, polychloroprene, silicones, synthetic polyisoprene and/or combinations of these elastomers. The elastomer is formulated with various other polymers, plasticizers, pH adjusters antiblocking/anticling additives, defoamers and other additives. The preferred elastomers are styrene-butadiene rubber and acrylic and the preferred polymer is a styrene acrylate.

An anchor (back) primer on the interior surface of the anchor (back) web may also be utilized to enhance adhesion of the anchor (back) adhesive to the anchor (back) web. If utilized, the anchor (back) primer coating comprises about 2 to 99.9% by weight of a polymer or combination of polymers selected from: styrene butadiene rubber (SBR), acrylic polymers and copolymers, ethylene vinyl acetate (EVA), ethylene methacrylic (EMA) or acrylic acid (EAA), polyethyleneimine (PEI), polyurethane (Pif), silanes and silanated polymers. The rest of the composition to be comprised of modifiers and water. Also, a transfer (front) primer coating may be utilized on the interior surface of the transfer (front) web to decrease adhesion of the transfer (front) adhesive to the transfer (front) web. If utilized, the transfer (front) primer coating comprises about 5 to 99% by weight of a polymer selected from: a high molecular weight polyethylene polymer or ethylene copolymer, SIS, SBS, SEBS, SBR. acrylics, silicone, or any other polymer base that, when formulated with the appropriate ingredients, can provide release from the transfer web. The anchor (back) and the transfer (front) adhesives have substantially the same formulation, but the anchor (back) and the transfer (front) web are composed of different materials. In another embodiment, the anchor adhesive and the transfer adhesive have essentially the same formulation, but the transfer and anchor primers are different compositions, with the anchor and transfer webs being either the same or different materials. In a third embodiment, the anchor adhesive and the transfer adhesive have essentially the same formulation, but the anchor (back) and transfer (front) web are both part of the same substrate and composed of the same material.

### DETAILED DESCRIPTION OF THE INVENTION

The present invention relates to waterbase self seal adhesive packaging systems, and more particularly to a waterbased self seal adhesive flexible packaging system that: utilizes a synthetic-based, self seal adhesive containing no natural latex that provides a bond between two substrates when sealed, but when peeled, the adhesive splits, adhesively fails from either or both the front web or the back web, or destroys one or both of the substrates of the package, called a Peelable. Primers and release coating may also be used to enhance the performance of the self seal adhesive. The packaging material can be utilized to wrap various types of products, such as food products like candy and other comestibles, or sterile medical devices such as syringes, tubing, gloves, bandages and the like. Although food products and medical devices may be the preferred articles wrapped by the present self seal adhesive system, the present disclosure is not limited to such packages, but instead may be utilized with other forms of packaging for containing both comestible as well as non-comestible products.

the creation of a package typically begins with the production of a continuous sheet or web of wrapping material. The continuous web of material is generally in the form of a thin, flexible film, and as is conventional, proceeds generally horizontally downstream to multi-station printing presses where artwork and text in one or more colors is applied to its exterior surface, and adhesive in applied to its interior surface in either a predetermined pattern or overall coverage. The adhesive pattern typically will be rectangular defined by a pair of longitudinal strips along opposite edges of the web and a transverse strip extending between the two longitudinal strips. The distance between the transverse strips of adhesive define the length of the particular wrapper. The adhesive layer is typically applied to the interior surface of the web after the application of the artwork and text on the exterior of the web by Gravure roll application, or by any other conventional means, so that the layer of adhesive has a thickness of about 0.05 to about 1.0 mil and may consist of either a multitude of separate spots or dots or a solid continuous layer. Also, it is typical for a protective surface, such as an overprint varnish or a release film, to be applied over the artwork and text to protect the artwork and text from smudging, and to increase the coefficient of friction of the exterior surface of the web. As is conventional, the adhesive is applied in lengthwise and widthwise strips in the appropriate surface areas of the web to form a rectangular configuration so that after insertion of the article to be wrapped, the web may be folded so that the longitudinal and transverse strips of adhesive register with one another and become aligned so that upon the application of pressure, the web forms the shape, size and volume with the package desired.

As noted above, the web itself is generally preferred to be formed as a thin, flexible material to function as a substrate for the materials to be applied. The web itself may be made of a plastic film material such as polyethylene, polypropylene, polyesters, polyolefins, polystyrene, nylon, polycarbonates, cellophane, ethylenevinyl acetates, ethylenevinyl alcohols, polyvinyl alcohols, polyvinyl chloride, alphaolefins, polyvinyl butyrate, cellulose acetate, butyrate or cellulose acetate propionate or metallized versions of any of the aforementioned films. Alternately, depending upon the article to be packaged, the web may be made of a metalized foil such as aluminum foil, or the metalized foil may be laminated to the web. Another alternative, especially for use in connection with medical devices, is for one or more webs to be formed of paper and paper products, including paperboard such as containerboard, which includes corrugating medium and linerboard used to make corrugated paper, and boxboard used to make folding cartons. In addition, paper products such as publication grade paper or bleached or unbleached kraft paper, or recycled paper may also be utilized. The above paper products may also be clay-coated to enhance printing of the artwork and text.

In all Peelable self seal systems, the acceptable mode of failure is determined by the market in which the self seal will be sold. Modes of failure include but are not restricted to, cohesive failure, cohesive split, adhesive failure, film or paper destruct, etc.

It is important to note that the self seal adhesives utilized in the present system contains no natural rubber. As used herein, the term "natural rubber" includes all materials made from or containing natural latex. The term "natural latex'' as used herein is defined as a milky fluid that consists of extremely small particles of rubber obtained from plants, principally from the *H. brasiliensis* (rubber) tree dispersed in an aqueous medium. It contains a variety of naturally occurring substances, including cis-1, 4-polyisoprene in a colloidal suspension and plant proteins which are believed to be the primary allergen. Products that contain natural rubber are made using two commonly employed manufacturing processes, namely, the natural rubber latex (NRL) process, and the dry natural rubber (DNR) process. The NRL manufacturing process involves the use of natural latex in a concentrated colloidal suspension. Products are formed from natural rubber latex by dipping, extruding, or coating, and are typically referred to as containing or made of natural rubber latex. Examples of products that may contain natural rubber latex include medical gloves, catheters and tracheotomy tubes. The DNR manufacturing process involves the use of coagulated natural latex in the form of dried or milled sheets. Products are formed from dry natural rubber by compression products typically are referred to as containing or made of dry natural rubber or "crepe" rubber molding, extrusion, or by converting the sheets into a solution for dipping. These. Examples of products that may contain dry natural rubber include syringe plungers, vial stoppers, and injection ports on intravascular tubing.

The present invention includes a stabilizer or antioxidant in an amount of from about 0.1% to 30% by weight, but preferably from about 5.0% to 20%. The stabilizers which are useful in the self seal adhesive composition of the present invention are incorporated to help protect the polymers noted above, and thereby the total adhesive system, from the effects of thermal and oxidative degradation which normally occurs during the application of the adhesive as well as in the ordinary exposure of the final product to the ambient environment and sterilization procedures. Such degradation is usually manifested by a deterioration in the appearance, physical properties and performance characteristics of the adhesive. Among the preferred antioxidants are Butyl Zimate, a zinc dibutyldithiocarbamate, and Irganox 1010, a tetrakis(methylene(3,5-di-teri-butyl-4-hydroxyhydrocinnnamate))methane manufactured by Ciba-Geigy. Among the applicable stabilizers are high molecular weight hindered phenols and multifunctional phenols, such as sulfur and phosphorus-containing phenols. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrances thus providing the phenolic compound with its stabilizing properties. Representative hindered phenols include:
1,3,5-trimethyl-2,4,6-tris(3-5-di-tert-butyl-4-hydroxbenzyl) benzene;
pentaerythritol tetrakis-3(3,5-di-tert-butyl-4-hydroxyphenyl) propionate;
n-octadecyl-3(3,5-ditert-butyl-4-hydroxyphenyl) propionate;
4,4'-methylenebis(4-methyl-6-tert butylphenol);
4,4'-thiobis(6-tert-butyl-o-cresol);
2,6-di-tert-butylphenol;
6- (4-hydroxyphenoxy)-2,4-bis(n-ocytlthio)-1,3,5-triazine;
2,4,6-tris(4-hydroxy-3,5-di-tert-butyl-phenoxy)-1,3,5-triazine; di-n-octadecyl-3,5-di-tert-butyl-4-hydroxybenzylphosphonate;
2-(n-octylthio)ethyl-3,5-di-tert-butyl-4-hydroxybenzoate: and
sorbitol hexa-(3,3,5-di-tert-butyl-4-hydroxy-phenyl) propionate.

Preferred as a stabilizer is pentaerythritol tetrakis-3(3,5-di-tert-butyl-4-hydroxyphenol) propionate. Most preferred are the carbamates, such as Butyl Zimate, and various other sulfur containing compounds, etc. Most preferred for this invention is that the antioxidants are dispersions, emulsions, or solutions in water.

The performance of these stabilizers may be further enhanced by utilizing, in conjunction therewith; (1) synergists such as, for example, as thiodipropionate esters and phosphites; and (2) chelating agents and metal deactivators as, for example, ethylenediaminetetraacetic acid, salts thereof, and disalicylalpropylenedimine.

The adhesive composition useful in the method of the present invention may be formulated using any of the techniques known in the art. A representative example of the prior art procedure involves placing the ingredients one by one into a stainless steel mixing vessel, while providing enough agitation to ensure proper and effective mixing of the ingredients. After all the ingredients have been added, the adhesive batch is adjusted to meet its critical physical parameters.

Optional conditioning additives may be incorporated into the adhesive composition in order to modify particular physical properties. These additives may include colorants, such as titanium dioxide, defoamers, sequestrants, deionized water, preservatives, biocides, anti-blocking agents, anti-cling agents, pH adjusters, surfactants and other commonly known and used additives. As noted above, such additives can be present in amounts ranging from 0% to about 30% by weight.

Fillers may also be incorporated into the adhesive composition in amounts ranging from 0% to 40% by weight, preferably 0% to 10% by weight. These are inert in the formulation, and are typically added as an anti-blocking agent. Fillers may include hydrated alumina (Al₂O₃-3H₂O), silicates such as magnesium silicates, aluminum silicate, sodium silicate, potassium silicate and the like, mica, calcium carbonate (CaCO₃) and silica. Other commonly employed fillers may also be used as long as they do not materially alter the function of the remaining ingredients in the formulation.

As previously noted, the system may also include an anchor primer coating applied as a thin film on the interior surface of the anchor web to enhance adhesion of the anchor adhesive to the anchor web. The anchor primer coating comprises about 2 to 99.9% of a polymer or combination of polymers, selected from: styrene butadiene rubber (SBR), acrylic polymers and copolymers, ethylene vinyl acetate (EVA), ethylene methacrylic (EMA) or acrylic acid (EAA), polyethyleneimine (PEI), polyurethane (PU), silanes and silanated polymers. The anchor primer coating preferably comprises 90% by weight of a SBR.

The system may also include a transfer primer coating applied as a thin film on the interior surface of the transfer web to decrease adhesion of the transfer adhesive to the transfer web. The transfer primer coating preferably comprises about 5 to 99.9% by weight of a high molecular weight (i.e. molecular weight greater than 40,000) polyethylene polymer or copolymer. However, the transfer primer coating may be a SIS, SBS, SEBS, SBR, acrylics, silicone, a PVAc (polyvinyl acetate), an EVA (ethylene-vinyl-acetate), PE (polyethylene), PP (polypropylene), EAA (ethylene acrylic acid), EMAA (ethylene methacrylic acid), EEA (ethylene-ethyl acrylate), EMAC (ethylene-methyl acrylate), EVOH (ethylene-vinyl alcohol), or any of these blended with a synthetic elastomer as previously defined herein, and / or other materials to enhance release or stability.

The components of the Peelable system composition are as follows:

### EXAMPLE 4

| **Ingredient** | **%** |
|---|---|
| Synthetic Elastomer or Elastomers having a combined Tg lower than -60°C or higher than -40°C | 90 to 30 |
| A polymer emulsion or emulsions having a combined Tg between -30°C and +50°C | 0 to 70 |
| Plasticizer | 0 to 30 |
| pH adjuster(s) | 0 to 5 |
| Stabilizer(s) | 0 to 3 |
| Defoamer(s) | 0 to 3 |
| Anti-blocking/Anti-cling additive(s) | 0 to 20 |
| Other conditioning additives | 0 to 5 |

It is essential that the self seal adhesives come in contact with each other and are sealed with adequate pressure to ensure that a seal is obtained. These pressures range from 5 0.5 to 80 psi and are tested with a dwell time of 0.05 to 10 seconds. It is important to note that the coat weights of these self seal adhesives range from 0.1 to 5.0 pounds dry per 3,000 ft².

It is further important to note that the synthetic elastomer emulsion part of this invention is, but not limited to, either a Styrene Butadiene Rubber or an Acrylic Elastomer. Other elastomers include, but are not limited to, other acrylics, acrylic copolymers, isoprenes such as SIS and synthetic polyisoprene, polybutadienes such as SBS, styrene block copolymers such as SEBS, polychloroprenes, epdms, butyls, ethylene-vinylacetate amorphous polyalpha-olefin, and silicones, and/or combinations of these elastomers.

It is also important to note that the polymer emulsion part of this invention is, but not limited to a carboxylated Vinyl Acetate Ethylene emulsion or a Styrene Acrylate emulsion. Other polymer emulsions include, but are not limited to, acrylates, styrene acrylates, vinyl acetates, vinyl acetate ethylene copolymers, ethylene vinyl acetate copolymers, (high styrene) styrene butadiene rubbers, polyurethane dispersions, polystyrene emulsions. vinyl chloride ethylene emulsions, polyvinyl chloride homopolymer and copolymer emulsions, polyvinylidene chloride homopolymer and copolymer emulsions, polyethylene homopolymer and copolymer emulsions, polypropylene homopolymer and copolymer emulsions, and polyester emulsions, and/or combinations of these polymers.

It is important that the plasticizer be miscible with the polymer emulsion and/or the elastomer emulsion. Plasticizers of this type are: benzoate esters, phthalate esters, sebacate esters, adipate esters, acrylic esters, glycolate esters, citrate esters, aromatic oils, napthenic oils, paraffinic oils, oligomeric polyesters, lactates, liquid rosin esters, glycerates, and other monomeric, oligomeric or polymeric esters, or oils.

It is desirable that the plasticizer be preferably miscible with the polymer emulsion and be alkali soluble. Plasticizers of this type are: Carboset 515 supplied by BF Goodrich Specialty Chemicals, low molecular weight acrylic or acrylic copolymers having acid numbers between 25 and 250, low molecular weight olefin copolymers having acid numbers between 25 and 250, liquid rosin esters having acid numbers between 25 and 250, and other low molecular weight liquid polymers having acid numbers between 25 and 250.

In a peelable self-seal adhesive system, the transfer adhesive and anchor adhesive may have substantially the same formulation, and be preferably comprised of:
70 to 85% by weight of a styrene-butadiene rubba or a elastomer emulsions having a conbined Tg lower than -60°C or higher than -40°C;
10 to 20% by weight of a styrene-acrylate polymer emulsion; having a combined Tg between - 30° C and + 50°C ;
0.5 to 2% by weight of a plasticizer;
0.5 to 2% by weight of antiblocking/anticling additives; and
0.1 to 10% by weight of defoamers, pH adjusters, stabilizers, antioxidants and other additives; the components totaling 100% by weight of said adhesive.

It is important that the self seal system processes in the customer's equipment and releases from the back side of the roll when wound on a roll core.

Examples of the Peelable system are as follows:

### EXAMPLE 5

| **Material** | **Amount in %** | **Description** |
|---|---|---|
| Rovene 4020 | 75.4 | Styrene Butadiene Rubber Tg = -30 deg. C |
| Hycar 26288 | 16.8 | Styrene Acrylate polymer Tg = +20 deg. C |
| Carboset 515 | 1.2 | Alkali soluble Acrylic Plasticizer Tg = -14 deg. C |
| Lo-Vel 29 | 1 | Anti-blocking additive |
| Michemlube 156F | 0.4 | Anti-blocking additive |
| Dee-Fo 97-2 | 0.2 | DeFoamer |
| Aqueous Ammonia (Ammonium Hydroxide) | 0.6 | PH Adjuster |
| Water | 4.4 | Viscosity Adjusting Additive |

### EXAMPLE 6

| **Material** | **Amount in %** | **Description** |
|---|---|---|
| Carbotac XPD-1814 | 65.3 | Acrylic Rubber Tg = -30 deg. C |
| Hycar 26288 | 27.4 | Styrene Acrylate Polymer Tg = + 20 deg. C |
| Hystretch V-43 FDA | 5.3 | Acrylic Rubber Tg = -43 deg. C |
| Lo-Vel 29 | 1 | Anti-blocking Additive |
| Dee Fo 97-2 | 0.6 | DeFoamer |
| Aqueous Ammonia (Ammonium Hydroxide) | 0.4 | PH Adjuster |

To assess the utility of the self seal adhesives in various packaging applications, the synthetic adhesives disclosed below, were applied to a representative commercially available substrate film at a coat weight of 2.0 pounds per 3,000 ft² ream, +/-0.2 pounds per 3,000 ft² ream, using a #5 wire wound rod. All samples were sealed on a TMI^{R} SuperSealer_{™} Model #75-10, set at 0.5 second dwell, room temperature, and 80 psi over a 1 by 4 inch sample. All samples were peeled in a "T-Peel" mode at 12 inches per minute.

In Table 3 below, example 5 and example 6 are compared to product C1380-01, natural latex containing self seal manufactured by Ato Findley, Inc.

All products were coated onto "MLB 50 gage" polypropylene film manufactured by AET (Advanced Extrusion Technologies, Inc.), and blocked to "'RLS-60 gage" polypropylene film manufactured by AET (Advanced Extrusion Technologies. Inc.).

All products were blocked as coated MLB to RLS in a Kohler Block Tester for 16 hours, at 100 psi at either RT (Room Temperature) or 122 deg. F. The samples were then removed from the block tester and allowed to equilibrate for 1 hour. Then the samples were evaluated for release in an I-Mass_{™} Peel tester at 12 inches per minute.

In evaluating acceptable results, the following guidelines were used:
Minimum Peel Strength: approximately equal to C1380-01
Peak Peel Strength: >or = to 300 grams
Release Value after aging at RT: <100 grams
Release Value after aging at 122 deg. F: <100 grams

### TABLE 3

| **Test Parameter** | **Example 5** | **Example 6** | **C1380-01** |
|---|---|---|---|
| Minimum Peel Strength in grams | 280 | 233 | 240 |
| Peak Peel Strength in grams | 425 | 340 | 380 |
| Release Value, after aging at RT for 16 hours at 100 psi, in grams | 28 | 26 | 22 |
| Release Value, after aging at 122 deg. F for 16 hours at 100 psi, in grams | 45 | 18 | 60 |

As can be seen both examples 5 and 6 meet or exceed the performance of natural latex containing self seals. As stated earlier, the application of synthetic self seals are not limited to the substrate combination disclosed herein.

## Claims

1. A water based non-natural rubber containing peelable self seal adhesive system for bonding an anchor web to a transfer web to form a package to contain an article, said adhesive system comprising a transfer adhesive to be coated on a surface of the transfer web and an anchor adhesive to be coated on a surface of the anchor web, said transfer adhesive and said anchor adhesive having substantially the same formulation and being comprised of:
- 70 to 85 % by weight of one of more elastomer emulsion having a conbined Tg lower than - 60 °C or higher than - 40°C and selected among a styrene-butadiene rubber or an acrylic elastomer emulsion;
- 10 to 20 % by weight of one or more styrene-acrylate polymer emulsion having a conbined Tg between - 30°C and + 50 °C ;
- 0,5 to 2 % by weight of a plasticizer ;
- 0,5 to 2 % by weight of antiblocking/anticling additives ;
- 0,1 % to 10 % by weight of other conditioning additives ;
the components totalling 100 % by weight of said adhesive.

2. The adhesive system according to claim 1 wherein the elastomer emulsion having a combined Tg lower than - 60°C or higher than - 40°C is styrene-butadiene.

3. The adhesive system according to anyone of claims 1 or 2 further including a primer coating on the surface of said anchor web to enhance adhesion of said anchor adhesive to said anchor web.

4. The adhesive system according to claim 3 wherein said anchor primer coating comprises 2 to 99.9 % of a polymer or combination of polymers, selected from: styrene butadiene rubber (SBR), acrylic polymers and copolymers, ethylene vinyl acetate (EVA), ethylene methacrylic (EMA) or acrylic acid (EAA), polyethyleneimine (PEI), polyurethane (PH), silanes and silanated polymers.

5. The adhesive system according to anyone of claims 1 to 4 further including a primer coating on the surface of said transfer web to enhance adhesion of said transfer adhesive to said tranfer web.

6. The adhesive system according to claim 5 wherein said transfer primer coating comprises 2 to 99.9 % of a polymer or combination of polymers, selected from : styrene butadiene rubber (SBR), acrylic polymers and copolymers, ethylene vinyl acetate (EVA), ethylene methacrylic (EMA) or acrylic acid (EAA), polyethyleneimine (PEI), polyurethane (PU), silanes and silanated polymers.

7. The adhesive system according to anyone of claims 1 to 6 wherein said transfer and anchor web are each independently selected from a substrate composed of a material selected from the group consisting of paper, polyolefin, polyester, nylon, polyvinylchloride and metalized versions of these substrates as well as metal foil.

8. The adhesive system according to anyone of claims 1 to 7 wherein said transfer adhesive and said anchor adhesive have substantially the same formulations, and said transfer web and said anchor web are composed of different materials.

9. The adhesive system according to anyone of claims 1 to 7 wherein said transfer adhesive and said anchor adhesive have substantially the same formulations, and said transfer web and said anchor web are both part of the same substrate and composed of the same material.

10. The adhesive system according to anyone of claims 1 to 9 wherein said conditioning additive is selected from the group consisting of defoamers, biocides, anti-blocking agents, anti-cling agents, colorants, sequestrants, preservatives and surfactants.

## Patentansprüche

1. Auf Wasser basierendes, keinen Naturkautschuk enthaltendes, abziehbares, selbstversiegelndes Klebstoffsystem zum Verbinden einer Ankerbahn mit einer Transferbahn zur Bildung einer Verpackung zur Aufnahme eines Gegenstands, wobei das Klebstoffsystem einen auf eine Oberfläche der Transferbahn aufzutragenden Transferklebstoff und einen auf eine Oberfläche der Ankerbahn aufzutragenden Ankerklebstoff umfaßt, wobei der Transferklebstoff und der Ankerklebstoff weitgehend die gleiche Formulierung aufweisen und aus:
- 70 bis 85 Gew.-% einer oder mehrerer Elastomeremulsionen, die eine kombinierte Tg von weniger als -60°C oder mehr als -40°C aufweisen und unter einem Styrol-Butadien-Kautschuk oder einer Acrylelastomeremulsion ausgewählt sind;
- 10 bis 20 Ges.-% einer oder mehrerer Styrol-Acrylat-Polymer-Emulsionen, die eine kombinierte Tg zwischen -30°C und +50°C aufweisen;
- 0,5 bis 2 Gew.-% eines Weichmachers;
- 0,5 bis 2 Gew.-% Antiblock-/Antiklebeadditive;
- 0,1 bis 10 Gew.-% anderer Konditionierungsadditive
bestehen, wobei die Komponenten insgesamt 100 Gew.-% des Klebstoffs ausmachen.

2. Klebstoffsystem nach Anspruch 1, bei dem es sich bei der Elastomeremulsion, die eine kombinierte Tg von weniger als -60°C oder mehr als -40°C aufweist, um Styrol-Butadien handelt.

3. Klebstoffsystem nach einem der Ansprüche 1 oder 2, das ferner auf der Oberfläche der Ankerbahn eine Primerbeschichtung zur Verbesserung der Haftung des Ankerklebstoffs auf der Ankerbahn aufweist.

4. Klebstoffsystem nach Anspruch 3, bei dem die Ankerprimerbeschichtung 2 bis 99,9% eines Polymers oder einer Kombination von Polymeren, die unter Styrol-Butadien-Kautschuk (SBR), Acrylpolymeren und -copolymeren, Ethylen-Vinylacetat (EVA), Ethylen-Methacrylsäure (EMA) oder Ethylen-Acrylsäure (EAA), Polyethylenimin (PEI), Polyurethan (PU), Silanen und silanisierten Polymeren ausgewählt sind, umfaßt.

5. Klebstoffsystem nach einem der Ansprüche 1 bis 4, das ferner auf der Oberfläche der Transferbahn eine Primerbeschichtung zur Verbesserung der Haftung des Transferklebstoffs auf der Transferbahn aufweist.

6. Klebstoffsystem nach Anspruch 5, bei dem die Transferprimerbeschichtung 2 bis 99,9% eines Polymers oder einer Kombination von Polymeren, die unter Styrol-Butadien-Kautschuk (SBR), Acrylpolymeren und -copolymeren, Ethylen-Vinylacetat (EVA), Ethylen-Methacrylsäure (EMA) oder Ethylen-Acrylsäure (EAA), Polyethylenimin (PEI), Polyurethan (PU), Silanen und silanisierten Polymeren ausgewählt sind, umfaßt.

7. Klebstoffsystem nach einem der Ansprüche 1 bis 6, bei dem die Tranfer- und Ankerbahn jeweils unabhängig voneinander unter einem Substrat aus einem Material aus der Gruppe bestehend aus Papier, Polyolefin, Polyester, Polyamid, Polyvinylchlorid und metallisierten Versionen dieser Substrate sowie Metallfolie ausgewählt sind.

8. Klebstoffsystem nach einem der Ansprüche 1 bis 7, bei dem der Transferklebstoff und der Ankerklebstoff weitgehend die gleichen Formulierungen aufweisen und die Transferbahn und die Ankerbahn aus verschiedenen Materialien bestehen.

9. Klebstoffsystem nach einem der Ansprüche 1 bis 7, bei dem der Transferklebstoff und der Ankerklebstoff weitgehend die gleichen Formulierungen aufweisen und die Transferbahn und die Ankerbahn beide Teil des gleichen Substrats sind und aus dem gleichen Material bestehen.

10. Klebstoffsystem nach einem der Ansprüche 1 bis 9, bei dem das Konditionierungsadditiv aus der Gruppe bestehend aus Entschäumern, Bioziden, Antiblockmitteln, Antiklebemitteln, Farbmitteln, Sequestriermitteln, Konservierungsmitteln und Tensiden ausgewählt ist.

## Revendications

1. Système adhésif autocollant pelable contenant un caoutchouc non naturel à base d'eau pour le collage d'une bande d'ancrage sur une bande de transfert pour former un emballage destiné à contenir un article, ledit système adhésif comprenant un adhésif de transfert à appliquer sur une surface de la bande de transfert et un adhésif d'ancrage à appliquer sur une surface de la bande d'ancrage, ledit adhésif de transfert et ledit adhésif d'ancrage ayant une formulation quasiment identique et étant constitués de :
- 70 à 85 % en poids d'une émulsion d'un ou plusieurs élastomères ayant une Tg combinée inférieure à -60 °C ou supérieure à -40 °C et sélectionnée parmi un caoutchouc styrène-butadiène ou une émulsion élastomère acrylique ;
- 10 à 20 % en poids d'une émulsion d'un ou plusieurs polymères styrène-acrylate ayant une Tg combinée de -30 °C à +50 °C ;
- 0,5 à 2 % en poids d'un plastifiant ;
- 0,5 à 2 % en poids d'additifs anti-adhérence/anti-accrochage ;
- 0,1 à 10 % en poids d'autres additifs de conditionnement ;
les composants représentant au total 100 % en poids dudit adhésif.

2. Système adhésif selon la revendication 1, dans lequel l'émulsion élastomère ayant une Tg combinée inférieure à -60 °C ou supérieure à -40 °C est le styrène-butadiène.

3. Système adhésif selon l'une quelconque des revendications 1 ou 2, comprenant en outre un revêtement d'apprêt sur la surface de ladite bande d'ancrage pour améliorer l'adhésion dudit adhésif d'ancrage à ladite bande d'ancrage.

4. Système adhésif selon la revendication 3, dans lequel ledit revêtement d'apprêt d'ancrage comprend 2 à 99,9 % d'un polymère ou d'une combinaison de polymères, sélectionnés parmi : un caoutchouc styrène-butadiène (SBR), des polymères et copolymères acryliques, l'éthylène-acétate de vinyle (EVA), l'éthylène-acide méthacrylique (EMA) ou l'éthylène-acide acrylique (EAA), le polyéhylèneimine (PEI), un polyuréthane (PU), des silanes, et des polymères silanés.

5. Système adhésif selon l'une quelconque des revendications 1 à 4, comprenant en outre un revêtement d'apprêt sur la surface de ladite bande de transfert pour améliorer l'adhésion dudit adhésif de transfert à ladite bande de transfert.

6. Système adhésif selon la revendication 5, dans lequel ledit revêtement d'apprêt de transfert comprend 2 à 99,9 % d'un polymère ou d'une combinaison de polymères, sélectionnés parmi : un caoutchouc styrène-butadiène (SBR), des polymères et copolymères acryliques, l'éthylène-acétate de vinyle (EVA), l'éthylène-acide méthacrylique (EMA) ou l'éthylène-acide acrylique (EAA), le polyéhylèneimine (PEI), un polyuréthane (PU), des silanes, et des polymères silanés.

7. Système adhésif selon l'une quelconque des revendications 1 à 6, dans lequel ladite bande de transfert et ladite bande d'ancrage sont sélectionnées chacune indépendamment parmi un substrat constitué d'une matière sélectionnée dans le groupe constitué de papier, de polyoléfines, de polyesters, de nylons, de chlorure de polyvinyle et des versions métallisées de ces substrats ainsi qu'une feuille métallique.

8. Système adhésif selon l'une quelconque des revendications 1 à 7, dans lequel ledit adhésif de transfert et ledit adhésif d'ancrage ont des formulations quasiment identiques, et ladite bande de transfert et ladite bande d'ancrage se composent de différentes matières.

9. Système adhésif selon l'une quelconque des revendications 1 à 7, dans lequel ledit adhésif de transfert et ledit adhésif d'ancrage ont des formulations quasiment identiques, et ladite bande de transfert et ladite bande d'ancrage font toutes deux partie du même substrat et se composent de la même matière.

10. Système adhésif selon l'une quelconque des revendications 1 à 9, dans lequel ledit additif de conditionnement est sélectionné dans le groupe constitué des agents antimousse, des biocides, des agents anti-adhérence, des agents anti-accrochage, des colorants, des séquestrants, des conservateurs et des tensioactifs.
